# EUROPEAN PATENT SPECIFICATION

(11) **EP 0 459 964 B1**
(45) Date of publication and mention of the grant of the patent: **28.09.1994**
(21) Application number: 91850134.7
(22) Date of filing: 22.05.1991
(51) Int. Cl.: F02B 29/08

(54) **Internal combustion engine with delayed charging**
Verbrennungskraftmaschine mit verzögerter Ladung
Moteur à combustion interne avec suralimentation retardée

(30) Priority: 30.05.1990 SE 9001941
(43) Date of publication of application: 04.12.1991
(73) Proprietor: AB VOLVO, 405 08 Göteborg (SE)
(72) Inventor: Dahlgren, Jan, S-416 58 Göteborg (SE); Karlsson, Jan, S-421 66 Västra Frölunda (SE)
(74) Representative: Hellbom, Lars Olof

(56) References cited:
- DE-C- 3 737 824
- US-A- 4 030 459
- PATENT ABSTRACT OF JAPAN vol. 8 no. 64 (M-285) abstract of JP 58-214637 publ. 13th December 1983 (TOYO KOGYO K.K.)

## Description

The present invention relates to an internal combustion engine according to the preamble of claim 1.

JP-A-58214637 discloses an internal combustion engine of this kind. The valve has a valve member connected to a valve stem cooperating with a solenoid. The valve is used to reduce pumping loss.

Modern automobile engines, which have intake air systems with tuned intake manifolds, have a relatively narrow optimum range for optimum operation, and this must be placed within the R.P.M. range of most frequent engine operation at normal driving speed. At lower engine speeds and even to a certain extent at higher engine speeds, the optimum degree of filling cannot be obtained due to the fact that a sufficient amount of fuel-air mixture is not supplied to the engine cylinders. At low engine speed, both the engine efficiency and driving comfort will be poorer than within the engine speed range for which the intake manifolds are tuned.

For quite some time it has been known to utilize so-called delayed charging to increase the degree of filling of the engine and the torque, primarily at low engine speed, i.e. at R.P.M.:s below that for which the intake manifolds are tuned. Delayed or pulse charging can be achieved with the aid of valves in the intake manifolds, said valves being held closed during the initial phase of the intake stroke, thus creating a negative pressure in the cylinder chamber. At a certain point in time - according to the principle: the lower the R.P.M., that much later in the intake stroke - the valve is opened and the fuel-air mixture is allowed to flow into the cylinder. The pulse effect thus provides a "supercharging" which increases the engine torque.

In a known internal combustion engine with delayed charging (DE 33 38 870), a valve device in the form of a pair of rotatably driven disc-shaped valve elements is disposed in the engine intake manifold. The discs have circumferentially extending slots which expose the cross-section of the intake manifold once per revolution. This design thus provides for a gradual exposing of the flow cross-section of the intake manifold when the front edge of the slot moves across the cross-section and a gradual closing when the rear edge of the slot moves across the cross-section.

In general, the faster the valve in the intake manifold can open, the greater will be the pulse effect and thus the charging. The purpose of the present invention is to provide an internal combustion engine of the type described by way of introduction with a valve device which can open more rapidly than the above described known valve devices can be opened, which is simple in its construction and can be controlled to precisely adapt its valve times to the current engine speed and load.

This is achieved according to the invention by means of a valve having the characterizing features of claim 1.

Such a valve flap placed in a magnetic field generated by a permanently mounted electromagnet in the intake manifold can be made with low weight. Since it does not need to be connected to any special operating means, the design as a whole will be not only light but also simple and inexpensive. The low weight provides very little inertia and thus the reaction time of the valve will be short. The electromagnetic control of the valve makes it possible to use the same control principles as are used in controlling engine ignition, and this makes it possible to achieve in a very simple manner very precise control of the valve times in relation to engine speed and load.

The invention will be described in more detail with reference to an example shown in the accompanying drawings, where
Figure 1 shows a cross-section through a portion of a cylinder head with intake manifold,
Figure 2 is a diagram illustrating the flap valve times as related to the ordinary engine valve times,
Figure 3 is an indicator diagram, and
Figure 4 is a diagram illustrating the change in the degree of filling within a low rev range with delayed charging.

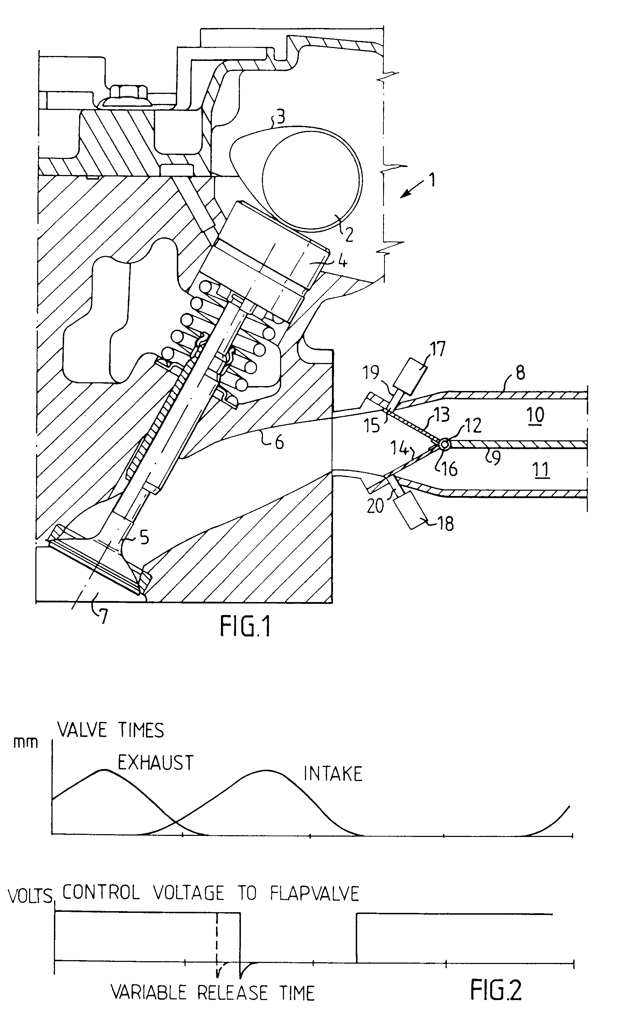

In Figure 1, 1 designates in general a portion of a cylinder head of an internal combustion engine with double overhead cam shafts, one of which is shown and labelled 2. The respective cam 3 controls via valve lifters 4 the intake valves 5 in the intake ducts 6, which lead to the respective cylinder chamber 7. An intake pipe 8 is connected to the duct 6 shown, and this pipe can be one of four branches of an intake manifold to a four-cylinder engine, the other branches (not shown) connecting in a corresponding manner to respective intake ducts to the other cylinder chambers of the engine.

The intake pipes 8 are divided by partition walls 9 into two passages 10 and 11. At the end of the wall 9 proximate the cylinder head, there is a pin 12 mounted in a manner not described in more detail here. The pin 12 supports a pair of valve flaps 13, 14 and can, for example, be fixed in the intake pipe 8, and the flaps 13, 14 can be mounted on the pin 12 on the same principle as a "piano hinge". The flaps 13, 14 have such a shape (semicircular, semi-elliptical or the like) that they, in the position shown in Figure 1, in which they form an acute angle with each other, seal against a flange in the intake pipe 8, serving as a valve seat. In the position shown in Figure 1 of the valve flaps 13, 14, the communication is thus broken between the intake pipe 8 upstream of the flaps 13, 14 and the intake duct 6. The pin 12 supports a weak helical spring 16, which exerts a small force striving to keep the flaps in the position shown. Electromagnets are fixed outside the intake pipe 8, by means of which magnetic fields are created in the intake pipe near the valve seat flange 15.

Figure 1 shows schematically and only for the sake of illustration, two diametrically opposed electromagnets 17, 18, the magnet bars 19, 20 of which extend through the wall of the intake pipe 8 and have their inner ends flush with the valve seat flange 15. Depending on the design of the electromagnets 17, 18 and the flange 15, a magnetic field can be created about the entire flange 15 or parts thereof when current is supplied to the electromagnets. The flaps 13, 14 are completely or partially made of a magnetic material, and this means that under the influence of the electromagnetic attractive force, they will be held against the flange 15 when the current is turned on.

With the flaps 13, 14 closed, in the initial phase of the intake stroke of the cylinder, the negative pressure is created in the cylinder chamber, and thus there is a pressure difference over the flaps with a resulting force on the flaps in the opening direction. These can now be controlled to open in accordance with two models which are different in principle.

According to the first model, at a certain instant determined by signals from a control unit (not shown in more detail here), to which signals are fed representing inter alia engine speed and load, the current is broken to one or both of the electromagnets, whereupon one or both of the flaps is swung to a position parallel to the flow direction. A momentary pole reversal of the current as the valve is opened "demagnitizes" the valve flaps to avoid residual magnetism. The pole reversal also creates a repellant force, which to a certain extent can contribute to the very rapid opening reaction of the valve. According to the second model, the attractive force of the magnets is controlled by means of a voltage regulator, and the valve flaps will open when the force created by the pressure difference over the flaps becomes greater than the magnetic force. The voltage supplied by the voltage regulator is determined inter alia by the engine speed and the load.

The diagram in Figure 2 illustrates when the voltage to the electromagnets is turned on in relation to the opening times of the exhaust and intake valves in an arrangement controlled according to the first model described above. When the current is broken, the electromagnets release the flaps which then open. Depending on the engine speed, the release time is varied between the time when the exhaust valve is completely closed (dashed line) and the time when the intake valve has been opened about two thirds. When the intake valve has been completely closed, current is supplied again. The force of the weak spring 15 returns the valve flaps 13, 14 to their closed position since there is no longer a negative pressure on the suction side.

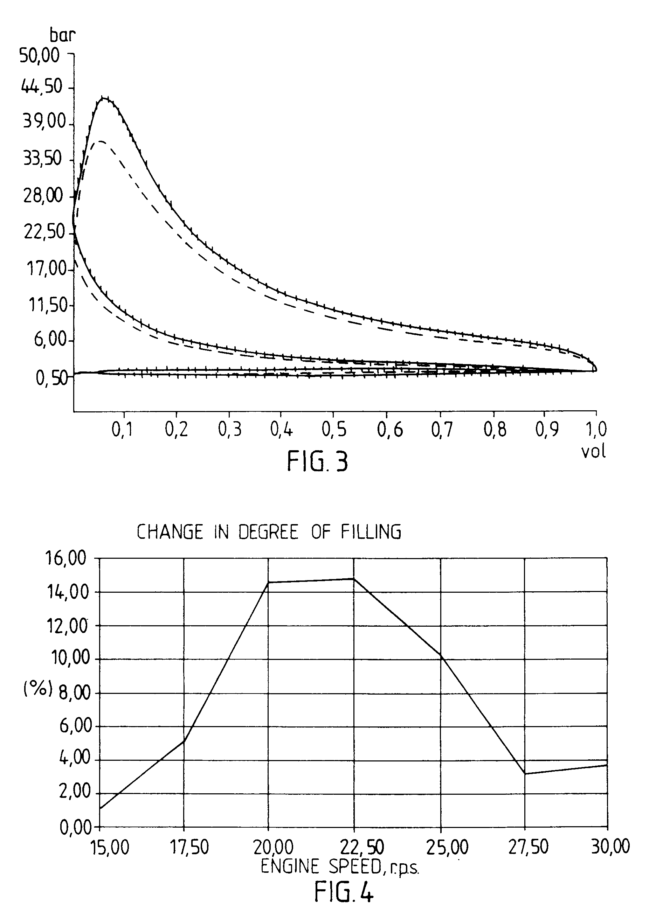

Figure 3 shows an indicator diagram, in which the solid line curve shows the indicated work of an engine having the above-described valve arrangement for delayed charging. The dashed line curved shows the indicated work for the same engine without delayed charging. The diagram shows that the invention provides about 15% additional torque. The change in degree of filling is shown in the diagram in Figure 4.

The engine described above has an intake pipe 8 divided by an intermediate wall 9 into two passages 10 and 11 with two valve flaps 13, 14, which, in their closed position, have a V-shaped configuration so that they function as non-return valves and prevent return flow during the overlap between the opening phases of the exhaust and intake valves. The valve flaps can open individually or together to open one or both passages.

The invention is of course not limited to such an arrangement. Most engines lack this partition of the intake pipe into two passages, having only one passage or duct per cylinder. But even in this case, two valve flaps of the design described, i.e.hinged on a pin centrally mounted in the duct, can be used. In this case, both flaps are always syncronized. Within the scope of the invention, a single hinged flap can of course also be used, mounted in such a way that the non-return valve function is provided.

Instead of hinged flaps, rigidly mounted flaps of flexible material can be used, which open by flexing of the flap itself.

In the embodiment described above, one flap valve per cylinder is used, but it is also possible to coordinate one valve with several cylinders.

If the valve is opened later than as described above for maximum degree of filling, turbulence in the combustion chamber can increase. In combination with the flap valve arrangement described, the ordinary intake valves of the engine can be allowed to open earlier and close later.

## Claims

1. Internal combustion engine, comprising a valve arranged in the intake duct to the respective cylinder chamber, said valve being located upstream of cylinder intake valve means and in its closed position sealing the intake duct to prevent the fuel-air mixture from flowing into the cylinder chamber, said valve being controlled at a certain point in time to open the duct so that the fuel-air mixture can flow freely into the cylinder chamber, wherein the valve has a valve member arranged in the intake duct (10,11), said valve member cooperating with an electromagnetic operating means (17-20), which in the activated state keeps the valve member in its closed position, characterized in that the valve member comprises at least one valve flap (13,14) at least a portion of which consists of magnetic material, and that the electromagnetic operating means (17-20) is fixed relative to the intake duct (10,11) and is arranged so that when in its activated state, it creates a magnetic field acting about the flap striving to hold the flap in its closed position during the initial phase of the intake stroke.

2. Engine according to claim 1, characterized in that the valve flap (13,14) is so disposed that a higher pressure on its side facing the cylinder chamber than on its opposite side acts in the closing direction, while a reversed pressure difference acts in the opening direction.

3. Engine according to claim 1 or 2, characterized in that the valve flap (13,14) is spring-biased towards its closed position.

4. Engine according to one of claims 1-3, characterized in that the valve has two valve flaps (13,14) acting in opposite directions in their closed positions, and which are hinged centrally in the intake duct (10,11).

5. Engine according to claim 4, characterized in that the intake duct has two passages (10,11) separated by a central partition wall (9), and that the valve flaps (13,14) are hinged on a common pin (12) at an inner end of the partition wall.

## Patentansprüche

1. Brennkraftmaschine mit einem Ventil, angeordnet in der Ansaugführung für die jeweilige Zylinderkammer, wobei das Ventil stromaufwärts der Zylinderansaugventileinrichtung angesiedelt ist und in seiner geschlossenen Position die Ansaugführung versiegelt, um zu verhindern, daß die Kraftstoff-Luft-Mischung in die Zylinderkammer fließt, wobei das Ventil zu einem bestimmten Zeitpunkt gesteuert wird, die Führung zu öffnen, so daß die Kraftstoff-Mischung frei in die Zylinderkammer fließen kann, wobei das Ventil ein Ventilelement hat, welches angeordnet ist in der Ansaugführung (10, 11), wobei das Ventilelement kooperiert mit einer elektromagnetischen Betriebseinrichtung (17 - 20), welche in dem aktivierten Zustand das Ventilelement in seiner geschlossenen Position hält,
dadurch **gekennzeichnet**, daß
das Ventilelement zumindest eine Ventilklappe (13, 14) umfaßt, von der zumindest ein Abschnitt aus einem magnetischen Material besteht, und
die elektromagnetische Betriebseinrichtung (17 -20) befestigt ist relativ zur Ansaugführung (10, 11) und so angeorndet ist, daß sie in ihrem aktivierten Zustand ein magnetisches Feld erzeugt, das im Bereich der Klappe agiert und bestrebt ist, die Klappe in ihrer geschlossenen Position während der anfänglichen Phase des Ansaugtaktes zu halten.

2. Motor nach Anspruch 1, dadurch gekennzeichnet, daß die Ventilklappe (13, 14) so angeordnet ist, daß ein höherer Druck auf ihrer Seite gegenüber der Zylinderkammer als auf ihrer gegenüberliegenden Seite in der Schließrichtung agiert, während eine umgekehrte Druckdifferenz in der Öffnungsrichtung agiert.

3. Motor nach Anspruch 2, dadurch gekennzeichnet, daß die Ventilklappe (13, 14) federvorgespannt ist in Richtung ihrer geschlossenen Position.

4. Motor nach einem der Ansprüche 1 bis 3, dadurch gekennzeichnet, daß das Ventil zwei Ventilklappen (13, 14) hat, welche in entgegengesetzte Richtungen in ihren geschlossenen Positionen agieren, und welche zentral scharniermäßig in der Ansaugführung (10, 11) gelagert sind.

5. Motor nach Anspruch 4, dadurch gekennzeichnet, daß die Ansaugführung zwei Passagen (10, 11) hat, welche unterteilt sind durch eine zentrale Teilungwand (9), und daß die Ventilklappen (13, 14) scharniermäßig gelagert sind an einem gemeinsamen Stift (12) an einem inneren Ende der Trennungswand.

## Revendications

1. Moteur à combustion interne, comprenant une soupape disposée dans la conduite d'admission vers la chambre du cylindre respectif, ladite soupape étant située en amont des moyens de soupape d'admission du cylindre et dans sa position fermée obturant hermétiquement la conduite d'admission pour éviter que le mélange carburant - air ne passe dans la chambre du cylindre, ladite soupape étant commandée à un certain instant pour ouvrir la conduite de telle sorte que le mélange carburant - air puisse passer librement dans la chambre du cylindre, dans lequel la soupape a un élément de soupape disposé dans la conduite interne (10,11), ledit élément de soupape fonctionnant conjointement avec des moyens à fonctionnement électromagnétique (17-20), qui, dans leur état activé, gardent l'élément de soupape dans sa position fermée, caractérisé en ce que l'élément de soupape comprend au moins un clapet de soupape (13,14) dont au moins une partie est constituée de matériau magnétique, et en ce que les moyens à fonctionnement électromagnétique (17-20) sont fixés par rapport à la conduite d'admission (10,11) et sont disposés de telle sorte que dans leur état activé, ils créent un champ magnétique agissant sur le clapet pour le maintenir en position fermée pendant la phase initiale de la course d'admission.

2. Moteur selon la revendication 1, caractérisé en ce que le clapet de soupape (13,14) est disposé de telle sorte qu'une pression du côté de la chambre du cylindre qui est supérieure à celle du côté opposé agit dans le sens de la fermeture, alors qu'une différence de pression inverse agit dans le sens de l'ouverture.

3. Moteur selon la revendication 1 ou 2, caractérisé en ce que le clapet de soupape (13, 14) est polarisé par un ressort dans sa position fermée.

4. Moteur selon l'une des revendications 1 à 3, caractérisé en ce que la soupape a deux clapets de soupape (13,14) agissant dans des sens opposés dans leurs positions fermées, et qui basculent de façon centrale dans la conduite d'admission (10,11).

5. Moteur selon la revendication 4, caractérisé en ce que la conduite d'admission a deux passages (10,11) séparés par une paroi de séparation (9), et en ce que les clapets de soupape (13,14) basculent sur un ergot commun (12) à une extrémité inférieure de la paroi de séparation.
